Europäisches Patentamt

European Patent Office

Office européen des brevets

(19)

(11) Publication number: **0 291 330**
A2

(12) **EUROPEAN PATENT APPLICATION**

(21) Application number: 88304361.4

(22) Date of filing: 13.05.88

(51) Int. Cl.⁴: **B 01 J 49/00**
C 02 F 1/42

(30) Priority: 14.05.87 GB 8711363

(43) Date of publication of application:
17.11.88 Bulletin 88/46

(84) Designated Contracting States:
BE DE FR GB IT NL

(71) Applicant: **ANGLIAN WATER AUTHORITY**
**Ambury Road**
**Huntingdon Cambridgeshire PE18 6NZ (GB)**

(72) Inventor: **Croll, Brian Thomas**
**10 Caldecote Road**
**Stilton Peterborough, PE7 3RH (GB)**

(74) Representative: **Perry, Robert Edward et al**
**GILL JENNINGS & EVERY 53-64 Chancery Lane**
**London WC2A 1HN (GB)**

(54) **Ground-water treatment.**

(57) Ground-water containing nitrate is treated by contact with an ion-exchange resin, the exhausted resin is regenerated, and the spent regenerant (containing nitrate) is subjected to electrolysis, thereby reconstituting the regenerant. For example, regenerant is supplied from a tank 1 to an ion-exchange unit 2 from which spent regenerant is passed to an electrolytic cell 3. The reconstituted regenerant (e.g. sodium bicarbonate) can be recirculated to the ion-exchange resin.

## Description

## GROUND-WATER TREATMENT

Field of the Invention

This invention relates to the treatment of ground-water and, in particular, to the control of nitrate levels in ground-water intended for introduction into the general water supply.

Background of the Invention

Nitrates are widely used as fertilisers. As such, they are taken up by plants during their growth. On plant degradation, however, nitrates are released. Particularly in areas of intense agriculture, therefore, the concentration of nitrates in ground-water can reach levels which are generally considered undesirably high for water supplies.

Standards exist, to the effect that the water supply nitrate content should be not more than 50 mg/l, calculated as $NO_3$. Such levels can be exceeded in ground-water, in circumstances of the type described and, without treatment, it is likely that an increasing number of ground-water supplies will have nitrate contents approaching and exceeding limits which are potentially enforcible and which pressure for environmental control can only push down.

For introduction into the general water supply, therefore, ground-water having an excessive nitrate content must be treated. Nitrate removal can be achieved by ion-exchange or microbiological techniques, the latter using micro-organisms which function anaerobically to break down nitrates and generate nitrogen gas. For example, EP-A-0065035 describes surface apparatus for denitrifying water, by gasifying the water for treatment with hydrogen and using hydrogen-oxidising micro-organisms in the reactor. These various techniques are expensive.

In particular, it is known to treat ground-water with an ion-exchange resin, and to regenerate the ion-exchange resin with brine or bicarbonate. Brine has been preferred; in known processes, its use inevitably gives a chloride-containing wash water for disposal. Disposal to sea is most practical, but that may be very expensive if the water treatment plant is inland. Bicarbonate is a very much less efficient regenerant than brine, but if the spent regenerant is treated micro-biologically, the regenerant is reconstituted and can be used again.

US-A-3542657 describes the electrolysis of alkali metal hydroxide solutions and the concomitant conversion of nitrates to nitrites, nitrogen gas and ammonia. The chemistry of the various possible reactions, and the effect of varying parameters such as current density, are considered. Nickel was invariably used as the electrode material. Hydroxide is not a cost-effective ion-exchange regenerant.

Summary of the Invention

A novel process for treating ground-water containing nitrate comprises contacting the water with an ion-exchange resin, regenerating the exhausted ion-exchange resin with a regenerant, and subjecting the spent regenerant to electrolysis. By careful control of the electrolytic conditions, it is possible to reconstitute the regenerant and perhaps also to produce useful products such as fertiliser.

Description of the Invention

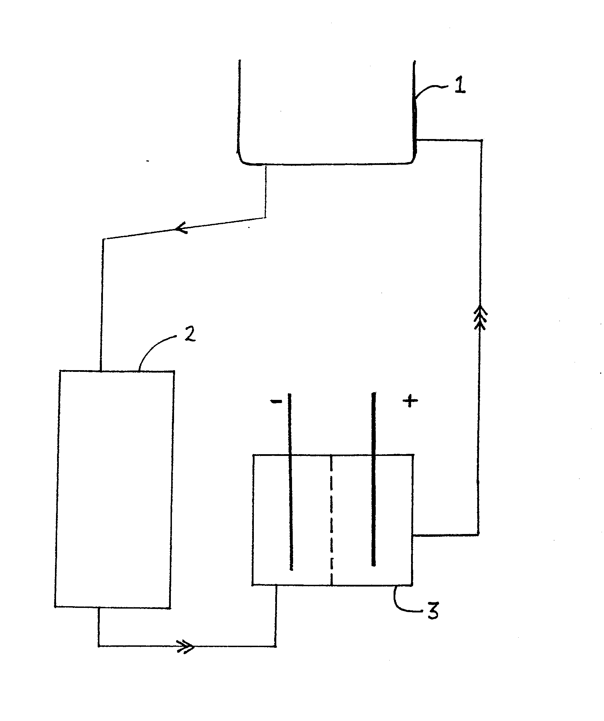

The invention will now be illustrated by way of example only with reference to the accompanying drawing which is a highly schematic view of apparatus suitable for use in the process of the invention. The drawing shows a regenerant-containing tank 1, an ion-exchange column 2 and an electrolytic cell 3 containing a cathode and an anode.

In use of the illustrated apparatus, a volume of ground-water is first passed through the ion-exchange column 2. The exhausted ion-exchange resin is then regenerated by passing regenerant from tank 1 to the ion-exchange column 2 in the direction of the single arrow. Spent regenerant (containing nitrate) is then passed from the ion-exchange column 2 to the electrolytic cell 3 in the direction of the double arrow. Reconstituted regenerant is then passed from the electrolytic cell 3 to the tank 1 in the direction of the triple arrow.

By comparison with the use of electrolysis to remove nitrate directly from ground-water, the process of the present invention subjects a far more concentrated nitrate solution to electrolysis. This is more efficient, because the concentration of ionic species is considerably higher. The solution obtained by regeneration of a conventional ion-exchange treatment of nitrate-containing ground-water may contain the regenerant and up to 10% $NaNO_3$.

The reaction(s) which take place in the electrolytic cell will depend, inter alia, on the components of the spent regenerant, the respective characteristics of the anode and the cathode, their spacing, and the applied voltage between them. The chemistry is given in US-A-3542657.

The regenerant may be, for example, an alkali metal or ammonium salt. The known disadvantages of using sodium chloride as the regenerant are minimised, by use of the present invention, because the volume of chloride-containing waste water for disposal is greatly reduced.

In certain circumstances, sodium or potassium bicarbonate may be a preferred regenerant because, although bicarbonate is less efficient than chloride as a regenerant, the present invention allows its reuse while taking advantage of the fact that bicarbonate can be safely sprayed on to land areas. Another possible regenerant is sulphate, e.g. as the sodium or potassium salt.

The material of each electrode is, for example, platinised titanium, nickel, stainless steel, copper or graphite. The electrode materials may be the same or different. Graphite is preferred if chloride is the regenerant, owing to the corrosive nature of the electrolyte, and especially corrosion-resistant graphite. Steel is a preferred material for bicarbonate. Dimensionally-stabilised electrodes are preferred.

Nitrogen and chlorine gases may be evolved; the former can be allowed to pass into the atmosphere and the latter can be used for disinfection. Ammonia may be generated rather than nitrogen, either as gas or as, say, ammonium chloride (which itself is a regenerant) in solution. Nitrogen-containing products of potential agricultural value may be produced and sold to defray the costs of the process itself.

A potential problem, if the electrolytic reaction is allowed to go beyond the basic nitrate $\rightarrow$ nitrite $\rightarrow$ $N_2$ sequence, to ammonia, is the disposal of ammonia in the ion-exchange material wash water. This can be avoided or minimised, if desired, by reducing the current density towards the end of electrolysis.

In general, the preferred reaction will be that which uses least energy. Meanwhile, the regenerant for the ion-exchange resin is regenerated as a result of the electrolytic process, and can be reused. The process therefore minimises the usage of regenerant, and makes bicarbonate a practical alternative to chloride where it is necessary to transport the wash water in tankers.

A primary advantage of the process of the present invention is that, by comparison with previous processes for the treatment of ground-water, the amount of waste is reduced. Additional advantages are that useful products may be obtained and that the amount of regenerant which is required is reduced.

The following Examples illustrate the invention. All concentrations herein are expressed on a w/v basis.

Example 1

A solution containing 5% $NaNO_3$ and 5% $NaHCO_3$, as obtained by regeneration with bicarbonate of an ion-exchange resin used to treat nitrate-containing ground-water, was subjected to electrolysis. The electrolytic cell (60 mm x 150 mm x 150 mm) contained two facing electrodes (each 152 x 112 mm effective surface area), 60 mm apart, each of stainless steel. A current density of 10.8 A/m$^2$ (51.6 A/ft$^2$) was applied. Oxygen was evolved at the anode, nitrogen and/or ammonia at the cathode. The temperature of the cell solution rose to 67°C.

80% reduction was observed over 48 hours. Greater efficiency is to be expected using stacks of membranes. Effective reduction was also found when, instead of stainless steel/stainless steel, Ni/Ni, Pt-Ni/Ni, stainless steel/Cu or stainless steel/Ni electrodes were used. Electrode blackening, and possibly also some reduction in efficiency, was observed for the Ni/Ni system.

Example 2

The general procedure of Example 1 was repeated, using chloride as the regenerant such that the solution subjected to electrolysis contained 5% $NaNO_3$ and 10% NaCl. The cell was somewhat larger (105 mm x 164 mm x 154 mm deep), and the electrode spacing was 77 mm. The electrodes were each of graphite. The electrode size and current density were the same as in Example 1.

$N_2$, $NH_3$ and some $H_2$ were produced at the cathode, $Cl_2$ at the anode. 39% reduction was observed over 20.5 hours. The temperature of the electrolyte rose to 40°C.

Effective reduction was also observed when the electrolyte contained 5% $NaNO_3$ and 5% NaCl, although $O_2$ was then produced at the anode. However, when Example 2 was repeated using Pt-Ti electrodes, effective reduction was observed only when the electrolyte contained additionally 20% NaOH.

The electrolysed solution of Examples 1 and 2 could be used as a regenerant.

**Claims**

1. A process for treating ground-water containing nitrate, which comprises contacting the water with an ion-exchange resin and regenerating the exhausted ion-exchange resin with a regenerant, characterised in that the spent regenerant (containing nitrate) is subjected to electrolysis, thereby reconstituting the regenerant.

2. A process according to claim 1, in which the regenerant is bicarbonate.

3. A process according to claim 1, in which the regenerant is chloride.

4. A process according to claim 1, in which the regenerant is sulphate.

5. A process according to any preceding claim, in which the reconstituted regenerant is recirculated to the ion-exchange resin.

0291330